# EUROPEAN PATENT APPLICATION

(11) **EP 4 832 374 A1**
(43) Date of publication of application: **28.10.2026**
(21) Application number: 25305591.7
(22) Date of filing: 24.04.2025
(51) Int. Cl.: H04B 10/071, G01H 9/00

(54) **GEO-REFERENCING FIBRE ROUTES OF A PASSIVE OPTICAL NETWORK**

(71) Applicant: Nokia Solutions and Networks Oy, 02610 Espoo (FI)
(72) Inventor: STRAUB, Michael, 75433 Maulbronn (DE); GUERRIER, Sterenn, 91300 Massy (FR); DAS, Sandip, 70469 Stuttgart (DE)
(74) Representative: Ipsilon Belgium

(57) **Abstract**

Example embodiments describe a device for determining a map of one or more fibre routes of an ODN of a PON, wherein the device is configured to: trigger generation of at least a first acoustic signal at a first geographic location and a second acoustic signal at a second geographic location, wherein the second geographic location is different from the first geographic location; receive at least first DAS data corresponding to a first DAS measurement synchronised with the generation of the first acoustic signal and second DAS data corresponding to a second DAS measurement synchronised with the generation of the second acoustic signal; determine, from the first and second DAS data, location information indicative for the first and second geographic locations respectively; and determine the map of the one or more fibre routes based on the location information, the first geographic location and the second geographic location.

## Description

### Technical Field

Various example embodiments relate to a device, a acoustic generator, a system, and a computer-implemented method for determining a map of one or more fibre routes of an optical distribution network.

### Background

A passive optical network, PON, provides telecommunication by use of fibre-optic technology. A PON has a one-to-multiple structure, wherein a central optical line terminal, OLT, services a plurality of optical network units, ONUs. The OLT and ONUs are connected to each other via an optical distribution network, ODN, comprising passive elements, such as fibre-optic cables and passive optical splitters. Downstream communication, i.e. from OLT to ONUs, and upstream communication, i.e. from an ONU to the OLT, may be enabled through a single channel of the ODN for bidirectional communication by making use of communication protocols.

In a PON, geographic locations of the fibre cables may not be precisely known. Geo-referencing the fibre routes may be useful for the purpose of maintenance as well as improvement or extension of the infrastructure. For example, in case of a failure of a fibre cable, repairments can be made more quickly when the geographic location of the impaired fibre cable is known.

To determine a map of the fibre routes of a PON, geographic locations of the fibre cables may be kept track of during installation. It may require a lot of time to piece together an entire map of an ODN. Additionally, this may result in inaccuracies due to human errors.

### Summary

The scope of protection sought for various embodiments is set out by the independent claims.

According to some aspects, there is provided the subject matter of the independent claims. Some further aspects are defined in the dependent claims.

The embodiments and features described in this specification that do not fall within the scope of the independent claims, if any, are to be interpreted as examples useful for understanding various embodiments.

According to a first aspect, there is provided a device for determining a map of one or more fibre routes of an optical distribution network, ODN, of a passive optical network, PON, wherein the device is configured to:
- trigger generation of at least a first acoustic signal at a first geographic location and a second acoustic signal at a second geographic location, wherein the second geographic location is different from the first geographic location;
- receive at least first Distributed Acoustic Sensing, DAS, data corresponding to a first DAS measurement synchronised with the generation of the first acoustic signal and second DAS data corresponding to a second DAS measurement synchronised with the generation of the second acoustic signal;
- determine, from the first and second DAS data, location information indicative for the first and second geographic locations respectively; and
- determine the map of the one or more fibre routes based on the location information, the first geographic location and the second geographic location.

Distributed Acoustic Sensing, DAS, is a technique that allows detecting acoustic signals surrounding an optical fibre. Performing a DAS measurement comprises transmitting a coherent optical signal into an optical fibre and detecting the reflected optical signal. This can be consecutively performed for a series of pulses of which reflections are then captured one after the other. A DAS module, i.e. a DAS apparatus, comprises a coherent laser configured to transmit the coherent optical signal and an optical receiver configured to coherently detect the reflected optical signal. A reflected signal comprises backscatter, which occurs due to Rayleigh scattering. Acoustic signals occurring in the vicinity of an optical fibre may influence such Rayleigh scattering in a reflected DAS pulse. Based on backscatter in the reflected signal, information on surrounding acoustic signals can be determined.

To this end, for example light intensity or phase information of a reflected DAS signal can be observed. For example, an intensity of reflected light pulses may be obtained during a time interval. This is referred to as coherent Optical Time Domain Reflectometry, OTDR. It is also possible to observe phase information during a time interval, also referred to as phase-sensitive coherent OTDR. Such a phase-sensitive DAS measurement allows capturing phase disturbances within backscattered pulses that are caused by an acoustic wave near the fibre cable. Such a phase-sensitive DAS measurement can be performed using a laser having a coherence length that is larger than a pulse length of the coherent optical signal. This ensures that during the duration of a pulse, the injected light remains coherent and phase shifts will only occur as a result of Rayleigh scattering. It is noted that DAS data, e.g. the first and second DAS data, may comprise one or more of: coherent OTDR data and phase-sensitive coherent OTDR data.

The device according to the first aspect uses DAS to identify a distance, within an optical cable, to a location where an acoustic wave intersects with the optical cable. For example, based on a parameter of a reflected pulse with respect to a transmitted pulse, a surrounding acoustic signal can be localised along the optical fibre. Such a parameter may, for example, be a time delay, phase disturbance, and/or attenuation. As such, a relative location, i.e. a distance within the optical fibre, of an acoustic wave can be obtained.

The device further exploits this concept of determining distances along the optical cables to obtain a map of an ODN. A difficulty when attempting to achieve this lies in the effect of optical splitters within the ODN. A splitter splits an optical signal in one direction and mixes, i.e. combines, optical signals in the other direction. As a result, the backscatter observed during a downstream DAS measurement comprises a superposition of the backscatter from all fibre sections behind a splitter. This makes distinguishing between the different fibre sections difficult. One way of solving this could be to provide multiple DAS measurements at different locations of the PON to allow resolving which backscatter originates from which fibre section. For example, both downstream and upstream DAS measurements could be performed. This would result in a costly approach in terms of equipment, since various DAS apparatuses would need to be installed at different locations within the PON.

The device further geo-references the fibre cables to obtain a geographic map of an ODN. To this end, at least two acoustic signals are triggered at two different locations and DAS measurements are performed during the time when the acoustic signals are active. In other words, the DAS measurements are synchronised with the acoustic signals to detect the relevant acoustic data. Because the device obtains DAS data related to acoustic signals originating from at least two different locations, the device is able to distinguish information from different fibre sections, comprising distribution fibres, e.g. feeder fibres, and drop fibres, even if they come together at a splitter.

One or more of the at least two acoustic signals may be a geo-acoustic, i.e. ground-based acoustic, signal. Such a geo-acoustic signal is a signal that propagates via the ground of the Earth.

Whenever one of the acoustic signals reaches a fibre, this becomes detectable in the DAS data. Such an occurrence may be referred to as an event. As such, a series of events related to the first and second acoustic signals can be detected within the first and second DAS data respectively. By resolving events within different fibres sections, the device becomes able to obtain a map. The map comprises the fibre routes, wherein a fibre route is a geographic location of a fibre section. Thus, the DAS data allows obtaining relative location information, for example, a distance along a fibre, i.e. relative with respect to the PON, to an intersection with an acoustic signal. The device is configured to relate this relative location information of the acoustic signals, as obtained by the DAS measurements, to absolute location information, i.e. the first and second geographic locations. The first and second geographic locations are referred to as absolute locations since they correspond to a physical location in the world.

The device may be incorporated within the PON. For example, the device may be part of an end node of the PON, such as an OLT or an ONU. The device may also be incorporated in a splitter of the ODN. Alternatively, the device may be a separate device provided elsewhere in the PON. Alternatively, the device may be provided separately from the PON. The device may be embodied as one or more physical parts, which may optionally be provided at different locations.

The device is able to obtain an accurate geographic map of the ODN, without being dependent on data collection by a human, thereby mitigating the risk of human errors. In addition, the map can be quickly obtained by making use of a single DAS entity, i.e. without a need for multiple DAS modules distributed over the PON.

According to further example embodiments, the device is further configured to trigger generation of a third acoustic signal at a third geographic location different from the first and second geographic locations, and further configured to receive third DAS data corresponding to a third measurement synchronised with the generation of the third acoustic signal.

By including events caused by a third acoustic signal at another location, the device can be configured to determine the map by applying triangulation, resulting in a more accurate map. Triangulation is the process of determining a location of a point by combining a distance to three other points of which the locations are known.

According to further example embodiments, the device is further configured to instruct at least one acoustic generator arranged at the geographic locations to generate the respective acoustic signals.

An acoustic generator is a device configured to generate an acoustic signal. An acoustic signal caused by an acoustic generator may affect the backscatter measurable during a DAS measurement upon reaching an optical fibre. An acoustic generator may also be referred to as an acoustic source. Instructing one or more generators is a possible way of triggering the generation of acoustic signals. By instructing an acoustic generator, the synchronisation of the acoustic signals with the DAS measurements can be controlled.

An acoustic generator may be a static acoustic generator, i.e. fixed at one geographic location. Such an acoustic generator may be unmovable. Alternatively, an acoustic generator may be a mobile acoustic generator configured to relocate itself, or may be configured to be movable, e.g. by means of transportation means. To obtain the map, at least two acoustic signals at two different locations are required. Two acoustic signals, e.g. the first and second acoustic signals, may be generated by a single movable acoustic generator that subsequently visits the first and second geographic locations. Alternatively, two acoustic signals may be generated by two acoustic generators respectively located at the first and second geographic locations.

According to further example embodiments, one of the at least one acoustic generator is a geo-acoustic generator or an acoustic generator configured to be in contact with a fibre of the ODN.

The acoustic generator may, for example, be a geo-acoustic generator configured to generate a ground-based acoustic signal that vibrates through the ground of the Earth. A geo-acoustic generator is usually an external acoustic source, i.e. configured to be outside the PON, i.e. an extra-PON acoustic generator. Since a geo-acoustic generator creates acoustic waves travelling via the surface of the Earth, such a generator provides waves at a relatively large amplitude or power, allowing the signal to travel over a large distance.

Alternatively, the acoustic generator may be configured to make physical contact with the ODN. Such an acoustic generator may be in direct contact with a fibre of the ODN, or may be indirectly in contact with a fibre of the ODN, e.g. via a splitter or via an OLT. Such an acoustic generator may be referred to as an intra-PON acoustic generator. By being provided onto the PON, an acoustic signal may directly propagate through the PON infrastructure. As a result, an acoustic signal having a much smaller intensity will already affect the DAS data.

According to further example embodiments, the device is further configured to generate at least one control signal for the at least one acoustic generator for triggering generation of the acoustic signals, wherein the at least one control signal is configured to trigger one or more of the at least one acoustic generators to generate an acoustic signal at one or more geographic locations.

By generating a control signal for triggering an acoustic generator, the instructing can be executed in a convenient way.

According to further example embodiments, the at least one control signal comprises time references to synchronise the respective DAS measurements with the generation of the acoustic signals.

A time reference may, for example, comprise a start time of generation of a acoustic signal. Additionally, the time reference may further comprise a duration of the generation of the acoustic signal. A time reference may, for example, be a time stamp.

Use of a time reference allows a precise synchronisation of the acoustic signals with the DAS measurements.

According to further example embodiments, the device is further configured to transmit the at least one control signal to the at least one acoustic generator. According to further example embodiments, the device is further configured to transmit the control signal to the at least one acoustic generators over a wireless link.

The at least one control signal may be provided to the acoustic generator in any possible way, including making use of human intervention. For example, a control signal can be locally provided to the acoustic generator, for example by manual handling of the acoustic generator. For a simple implementation, the at least one control signal may be transmitted via a technical medium, e.g. a wired or wireless link. For example, a radio link may be used. By transmitting the control signal(s) over a wireless link, there is no need to have a close proximity between the device and an acoustic generator. This further adds to the flexibility of placement of the device within or outside the PON.

According to further example embodiments, the device may further include a communication interface configured to be in communication with the at least one acoustic generator for transmitting the at least one control signal.

According to further example embodiments, receiving the DAS data comprises: instructing a DAS module to perform the DAS measurements; and receiving the DAS data from the DAS module.

The DAS module may be part of the device or may be incorporated separately from the device, i.e. as a separate unit. The DAS module is provided within the PON to allow interacting with the optical fibres. For example, the device may be part of an end node of the PON, such as an OLT or an ONU. Alternatively, the DAS module may be provided elsewhere in the PON.

Optionally, more than one DAS module may be instructed. For example, multiple DAS modules may be instructed to perform a DAS measurement synchronised with the same or different acoustic signals.

Only one dedicated DAS module is necessary for the device to be able to obtain the geographic map. This reduces installation costs before the device can be used to determine the map. In addition, flexibility in implementation is provided since the DAS module may be located anywhere in the PON. Additionally, it is an advantage that the DAS module may be a standard DAS module, without a need for special adjustments.

According to further example embodiments, the first and/or second DAS data further comprises additionally captured DAS data corresponding to one or more additional acoustic signals generated at respective additional geographic locations by one or more additional acoustic generators beyond control of the device, and wherein the device is further configured to: determine, from the additionally captured DAS data, additional location information indicative for the respective geographic locations of the one or more additional acoustic generators; and further determine the map from the received DAS data, the additional location information, and the respective locations.

The additional acoustic generator may be an external acoustic source that is beyond control of the device according to the first aspect. Alternatively, the additional acoustic generator may be an internal acoustic noise source, i.e. originating from within the PON. In other words, an additional acoustic signal is not triggered by the device. The device is not capable to interfere with the behaviour of the additional acoustic generator. Such an external acoustic source may, for example, be a train passing by, or may be related to construction work, e.g. a drill. The external acoustic source happens to cause an additional acoustic signal in the environment of the ODN during one of the DAS measurements and therefore results in additionally detected DAS data. If a geographic location of such an external source can be obtained by the device, the additional DAS data can be used in the same way as DAS data originating from a acoustic signal that is triggered by the device. As a result, if a location of the acoustic generator is known to the device, the device is capable of using the corresponding additionally captured DAS data to further improve the mapping accuracy. As such, the device is able to exploit signals generated by an acoustic noise source that would otherwise be disregarded during determination of the geographic map.

According to further example embodiments, the device is further configured to trigger simultaneous generation of the acoustic signals at different acoustic frequencies.

An acoustic signal may, for example, comprise periodic pulses that are generated at a frequency, e.g. a constant frequency. By deploying signals at different constant acoustic frequencies, events resulting from different acoustic generators can be distinguished in the DAS data. This allows the first and second DAS measurements to be performed at the same time. This may result in a simpler synchronisation of acoustic generation and DAS measurements, as well as in a faster determination of the geographic map.

According to further example embodiments, the device is further configured to trigger successive generation of the acoustic signals one by one.

The device may, for example, be configured to firstly trigger generation of the first acoustic signal synchronised with the first DAS measurement, and to, after completion of the first DAS measurement, trigger generation of the second acoustic signal synchronised with the second DAS measurement. This approach omits a need to generate the acoustic signals at specific frequencies. This may result in a more accurate geographic map in case fibres of the PON may move during operation, e.g. if the PON comprises aerial fibre cables.

According to further example embodiments, the device is further configured to trigger generation of the acoustic signals with different pulse patterns.

Similar to using different acoustic frequencies, different pulse sequences can be simultaneously used in the different acoustic signals to allow to distinguish between them. Similar to Morse code, a pulse pattern may, for example, comprise a repetitive sequence of pulses, wherein the pulses may have a varying length. Alternatively, the different pulse patterns may be deployed in an implementation of one-by-one generation of the acoustic signals.

According to further example embodiments, wherein the device is further configured to determine the map of the one or more fibre routes in function of PON topology information, comprising one or more of the following: a geographic location of an optical line terminal, OLT, of the PON, a geographic location of an optical network unit, ONU, of the PON, a geographic location of a splitter of the ODN, a geographic zone of a public area where a fibre route can pass through, a splitter ratio of a splitter of the ODN.

A geographic zone may, for example, be a square or a street, including sidewalks on two sides and a central median of the street. The device is able to localise the fibre routes, e.g. to indicate on which side of the street a fibre route is located. By including the PON topology information, determining the map may comprise imposing constraints as a function of the PON topology information to limit possible geographic locations of the fibre routes. This may result in a highly accurate geographic map, e.g. having a sub-meter-scale precision, i.e. better than an accuracy of 1 metre.

According to further example embodiments, the first and second geographic locations comprise Global Navigation Satellite System, GNSS, information. According to further example embodiments, the first and second geographic locations comprise Global Positioning System, GPS, information. GNSS is an ubiquitous technology to describe absolute location information. The GNSS information may comprise location information obtained using one or more of the following systems for navigation: GPS, GLObalnaya NAvigatsionnaya Sputnikovaya Sistema, GLONASS, Galileo and Biedou.

When using GPS to provide a geographic reference, the resulting map of fibre routes may also comprise GPS information.

According to a second aspect, there is provided an optical line terminal, OLT, of the PON, the OLT comprising the device according to the first aspect. According to a third aspect, there is provided an optical network unit, ONU, of the PON, the ONU comprising the device according to the first aspect. According to a fourth aspect, there is provided a splitter of the PON, the splitter comprising the device according to the first aspect.

According to a fifth aspect, there is provided an acoustic generator configured to be arranged at a geographic location, the acoustic generator comprising: a signal generation module configured to, in response to a trigger provided by a device according to the first aspect, generate an acoustic signal at a time reference; and a communication interface configured to receive the trigger from the device.

The acoustic generator according to the fifth aspect is configured to interact with the device according to the first aspect to allow the device to determine the geographic map.

According to a sixth aspect, there is provided an optical network unit, ONU, comprising an acoustic generator according to the fifth aspect.

The acoustic generator may be an acoustic generator according to the fifth aspect. An acoustic generator can be conveniently implemented at an ONU. For example, as a piezo-electric material inside the ONU, as a mobile phone vibrator, as a speaker, or as another embodiment. By implementing the generator inside the ONU, an intensity of the generator may advantageously be smaller than when the generator is applied outside the PON. Due to the physical contact with the optical channels, acoustic signals may not need to travel via the ground to interact with the fibre cable.

According to further example embodiments, the signal generation module is further configured to generate the acoustic signal at an ONU-specific frequency, or, having an ONU-specific pulse pattern. If multiple acoustic generators are implemented in ONUs, the acoustic signals can be generated simultaneously. Applying ONU-specific frequencies or pulse patterns allows easily distinguishing between different acoustic generators.

According to a seventh aspect, a system is provided comprising a device according to the first aspect and an acoustic generator according to the fifth aspect.

According to further example embodiments, the system further comprises a Distributed Acoustic Sensing, DAS, module configured to: perform one or more DAS measurements synchronised with acoustic signals, thereby generating DAS data; and transmit the DAS data to the device.

According to an eighth aspect, there is provided a computer-implemented method for determining a map of one or more fibre routes of an optical distribution network, ODN, of a passive optical network, PON, the computer-implemented method comprising:
- triggering generation of at least a first acoustic signal at a first geographic location and a second acoustic signal at a second geographic location, wherein the second geographic location is different from the first geographic location;
- generating the first and second acoustic signals at the respective geographic locations;
- performing at least a first and a second Distributed Acoustic Sensing, DAS, measurement of the respective acoustic signals to obtain first and second DAS data respectively;
- determining, from the first and second DAS data, location information indicative for the first and second geographic locations respectively; and
- determining the map of the one or more fibre routes based on the location information, the first geographic location and the second geographic location

### Brief Description of the Drawings

Some example embodiments will now be described with reference to the accompanying drawings.
Fig. 1 shows a Distributed Acoustic Sensing, DAS, measurement according to example embodiments;
Fig. 2 shows another DAS measurement according to example embodiments;
Fig. 3 shows geo-acoustic generators and a device for determining a map of one or more fibre routes of an optical distribution network, ODN, of a passive optical network, PON according to example embodiments;
Fig. 4 shows a map of one or more fibre routes of an ODN of a PON according to example embodiments; and
Fig. 5 shows an example embodiment of a suitable computing system for performing one or several steps of a computer-implemented method according to example embodiments.

### Detailed Description of Embodiments

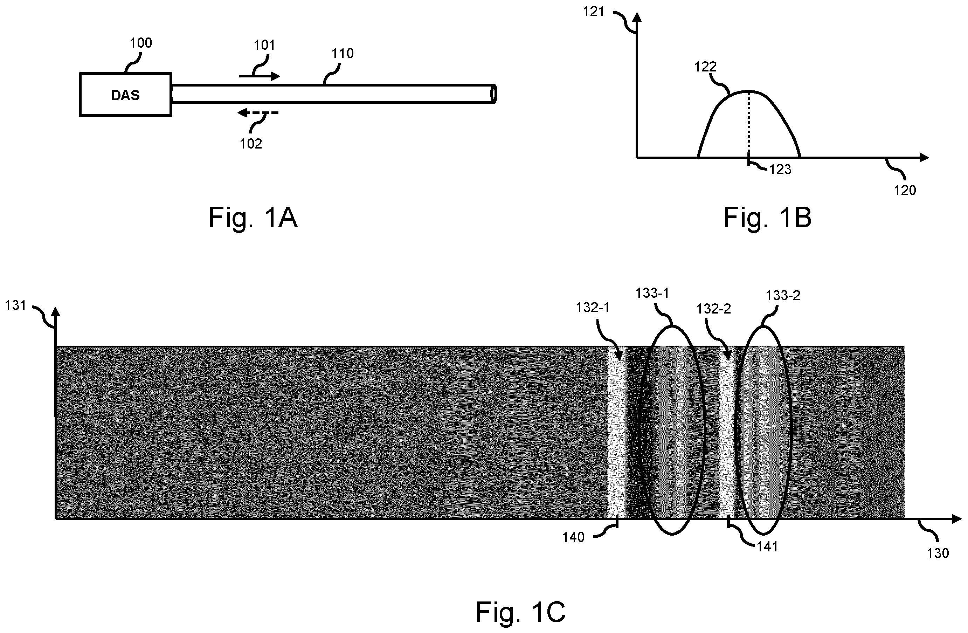

Figure 1 illustrates a Distributed Acoustic Sensing, DAS, measurement according to example embodiments.

Figure 1A shows a set-up of a DAS unit 100 connected to a single optical fibre cable 110. The DAS unit 100 is a device comprising a coherent optical transmitter, e.g. a coherent laser, and a coherent optical receiver configured to perform coherent detection of optical signals. DAS unit 100 may also be referred to as DAS module 100 or DAS apparatus 100. The DAS module 100 is configured to transmit a pulse 101 into the cable section 110 using the coherent transmitter. The DAS module 100 is further configured to, upon transmitting the pulse 101, wait for and detect a pulse 102 using the coherent receiver. The pulse 102 is a reflection from the pulse 101 that occurs as a result of pulse 101 moving back and forth through the optical cable 110. An acoustic signal, for example an acoustic wave or an acoustic pulse, may be present in the surroundings of the cable 110 during the travelling of the pulses 101, 102 through the optical cable 110. Such an acoustic signal changes the phase information of the backscattered pulse 102 as a result of Rayleigh scattering. The detected pulse 102 is observed, resulting in DAS data. The DAS data can then further be analysed to derive properties of the acoustic signal. A DAS measurement may comprise repeating transmission and detection of pulses 101, 102 over a time interval.

Figure 1B illustrates an optical pulse 122 over time. Axis 120 is a time axis and axis 121 shows an optical intensity of the pulse 122 over time. The pulse 122 may have a rectangular shape, or may have a sinusoidal shape as illustrated in Figure 1B. The pulse 122 has a centre 123. Pulse 122 may be symmetric around the centre 123. Pulse 101 may, for example, have a shape as optical pulse 122. Pulse 102 may have a similar shape but may be deformed as a result of acoustic signals in the environment of cable 110.

Figure 1C shows a so-called DAS plot illustrating DAS data. Horizontal axis 130 is a time axis to show the backscatter present in a detected pulse 102 in response to a transmitted pulse 101. In other words, axis 130 is a fast-time axis illustrating time behaviour of the fibre 110 in response to a single transmitted optical pulse 101. As such, time instances along the axis 130 correspond to locations along the fibre 110, as distance and time are linearly related via a propagation velocity of light 101, 102 within the fibre 110. Vertical axis 131 is a slow-time axis to enable showing the results of successively detected pulses 102 over a larger time window. A single time unit on the vertical axis 131 corresponds to one pulse pair 101, 102 being transmitted and captured. The DAS plot shows phase disturbance information as a brightness according to example embodiments. The brightness level may, for example, represent a phase shift of a centre of pulse 102 with respect to a centre of pulse 101. As such, darker regions represent a smaller phase shift than brighter regions. For example, regions 132-1 and 132-2 show that an increase in phase shift has been detected for successive pulses 102 around time 140 and time 141. Times 140, 141 correspond to particular locations along the fibre 110. This may, for example, be caused by an acoustic wave having pulses that reach the fibre 110 at those locations. This could, for example, occur when an acoustic source is located in line with the fibre 110. Furthermore, regions 133-1 and 133-2 show reverberation of the acoustic pulses detected in regions 132-1 and 132-2 respectively as attenuated and smeared out echoes. Alternatively, the brightness level may be related to an intensity level, i.e. an amplitude of an optical pulse 102. The time 140 or 141 can be used to determine a distance along the fibre 110 between the DAS module and a point where an acoustic signal reaches the fibre 110. This can be done by applying the principle of time-of-flight.

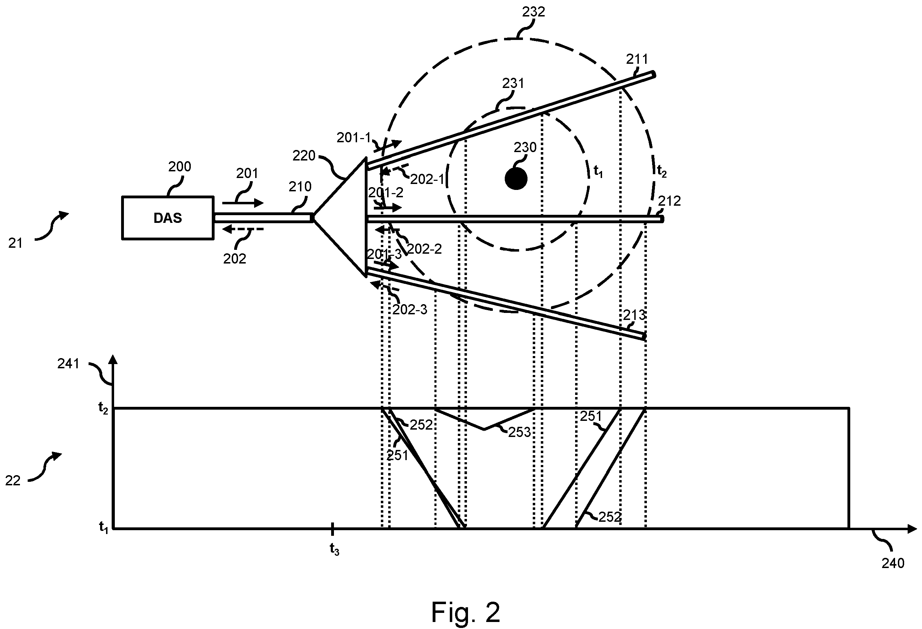

Figure 2 illustrates another DAS measurement according to example embodiments.

Subplot 21 of Figure 2 shows a DAS module 200 similar to DAS module 100 of Figure 1. The DAS module 200 is connected to a feeder fibre 210. The feeder fibre may also be referred to as a distribution fibre or a feeder section. The feeder fibre 210 may, for example, be a fibre between an optical line terminal, OLT, and a splitter, such as splitter 220. Splitter 220 has a splitter ratio of one-to-three and is connected to feeder fibre 210 on one side and drop fibres 211, 212, 213 on the other side. A drop fibre is a fibre section that is placed behind a splitter, e.g. a section connected to an optical network unit, ONU. The fibres may be solidly fixated, i.e. static, e.g. in the ground, or could be subject to movement, such as an aerial optical fibre that may move as a result of a wind force. An aerial optical fibre is a fibre cable that is arranged in the air, e.g. on a tower or a pole.

During the DAS measurement illustrated in Figure 2, a geo-acoustic generator 230 is active. The geo-acoustic generator 230 is static and therefore does not move around during the DAS measurement. Alternatively, the geo-acoustic source 230 could be mobile and stay in place during the DAS measurement. During another DAS measurement, the geo-acoustic source 230 may move around, and, may or may not generate a geo-acoustic signal during moving. At a time t₁, a wave pulse generated by source 230 is positioned on circle 231. Circle 231 has a location of the source 230 as origin. Some time later, at time t₂, said wave pulse has propagated further away from the source 230 and is located on circle 232. Circle 232 has a location of the source 230 as origin and has a larger diameter than circle 231 due to the propagation of the acoustic wave away from the source 230. At a time t₂, the geo-acoustic signal may be attenuated, i.e. have a smaller amplitude, than at time t₁. During the DAS measurement, the geo-acoustic source 230 continuously generates a geo-acoustic signal, comprising a single geo-acoustic pulse, originating at the source 230 at time t₃. The geo-acoustic pulse generated by the source 230 hits different parts of the drop sections 211, 212, 213 at different times.

During the DAS measurement, pulses 201 are transmitted into the feeder section 210. In splitter 220, the pulses 201 are split into pulses 201-1, 201-2, 201-3 that propagate into drop sections 211, 212, 213 respectively. Reflected pulses 202-1, 202-2, 202-3 in respective drop sections 211, 212, 213 propagate back into splitter 220. The splitter 220 combines the reflected pulses 202-1, 202-2, 202-3 into a reflected signal 202 in feeder section 210. In other words, the optical signal 202 is a superposition of the pulses 202-1, 202-2, 202-3. The optical signal 202 propagates back to the DAS module 200, where it is detected by the coherent receiver.

Subplot 22 of Figure 2 shows a DAS plot with first time axis 241, similar to axis 131, and second time axis 240, similar to axis 130. The DAS plot is obtained by detecting DAS pulses 202 over subsequent time intervals each having a length of t₂ minus t₁. An event is an occurrence of a geo-acoustic signal hitting, i.e. reaching, a fibre section at a particular location along the fibre. The DAS plot 22 shows the different events caused by interactions of the geo-acoustic pulse generated by the source 230 with the fibre sections 211, 212, 213. For example, events 251 are caused as a result of the geo-acoustic pulse generated by source 230 reaching drop section 211. Events 252 are caused as a result of the geo-acoustic pulse reaching drop section 212. Events 253 are caused by the geo-acoustic pulse hitting drop section 213.

Due to the splitter 220 combining the signals 202-1, 202-2, 202-3 into a single signal 202 before reaching the receiver of the DAS module, the DAS plot comprises a combination of the events that is not resolvable to the separate fibres 211, 212, 213.

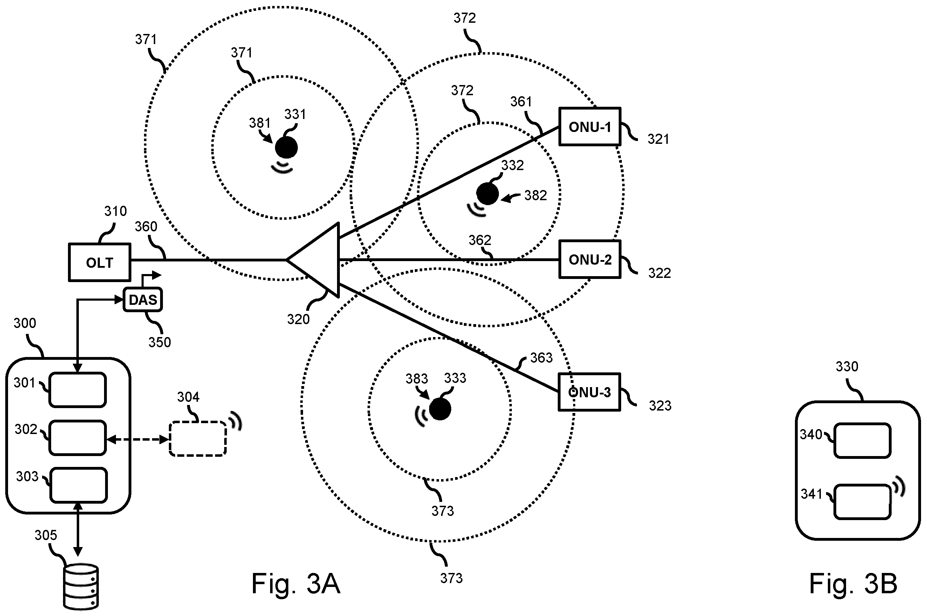

Figure 3A shows a device 300 for determining a map of one or more fibre routes 360, 361, 362, 363 of an optical distribution network, ODN, of a passive optical network, PON according to example embodiments. The PON comprises an OLT 310, ONU-1, 321, ONU-2, 322, ONU-3, 323, and an ODN. The ODN comprises a feeder fibre 360, a splitter 320 and drop sections 361, 362, 363.

The device 300 may be separated from the PON, as illustrated in Figure 3A. Alternatively, the OLT 310 may comprise the device 300. Alternatively, one of the ONUs 321, 322, 323 may comprise the device 300. Alternatively, the splitter 320 may comprise the device 300. Alternatively, different components, e.g. modules 301, 302, 303, of the device 300 may be comprised by different physical entities, such as the OLT, ONUs et cetera, of the PON.

The device 300 is configured to trigger generation of at least a first geo-acoustic signal 371 at a first geographic location 381 and a second geo-acoustic signal 372 at a second geographic location 382, wherein the second geographic location 382 is different from the first geographic location 381. The first and second geographic locations 381, 382 may, for example, comprise Global Positioning System, GPS, information. The device 300 may comprise a trigger module 302 configured to trigger the generation of the geo-acoustic signals 371, 372. The device 300 may be further configured to instruct at least one geo-acoustic generator 331, 332 arranged at the first and second geographic locations 381, 382 respectively to generate the respective geo-acoustic signals 371, 372. To this end, the device 300 may comprise a trigger module 302 configured to trigger the generation of the geo-acoustic signals 371, 372.

The geo-acoustic signals 371, 372 may comprise different acoustic frequencies, and may or may not be triggered by the device 300 to occur simultaneously. By having different frequencies, the geo-acoustic signals 371, 372 remain distinguishable, for example by means of a filtering operation. Similarly, applying different, source-specific pulse patterns may allow separating the geo-acoustic signals 371, 372 in the DAS data. A pulse pattern may, for example, comprise a repeating fixed sequence of pulses, e.g. a geo-acoustic pulse having a duration of one or more seconds, s, interleaved with a pause of 1s. It will be apparent that more complicated pulse patterns may be applied. Alternatively, the geo-acoustic signals 371, 372 may be generated one after the other, i.e. in a sequential manner, as opposed to simultaneously. This mitigates a need for a separation operation during post-processing of the DAS data.

The trigger module 302 may be configured to interact with the geo-acoustic sources 331, 332, for example over a wireless link, e.g. a radio link. To this end, the trigger module 302 may be configured to interact with a communication module 304 that comprises a transmitter, e.g. a radio antenna, to instruct the geo-acoustic sources 331, 332. The communication module 304 may be external to the device 300, as illustrated in Figure 3A, or may be part of the device 300. The communication interface Alternatively, the trigger module 302 may further comprise means for communicating with the geo-acoustic sources 331, 332, e.g. a radio transmitter. The device 300 may as such be configured to transmit control signals to the geo-acoustic generators.

The device 300 may trigger the generation of the signals 371, 372 by generating at least one control signal for the at least one geo-acoustic generator 331, 332 for triggering generation of the geo-acoustic signals 371, 372, wherein the at least one control signal is configured to trigger one or more of the at least one geo-acoustic generators 331, 332 to generate a geo-acoustic signal 371, 372 at one or more geographic locations 381, 382. A single control signal, containing trigger information for two or more of the sources 331, 332, may be broadcasted by the device 300. Alternatively, the sources 331, 332 may be triggered using separate control signals.

The synchronising of the DAS measurements with the geo-acoustic signals 371, 372 is performed by triggering the sources 331, 332 such that they produce the signals 371, 372 at a known time. The device 300 may then ensure that the DAS measurements be performed when the geo-acoustic sources are active based on this known time. This may be implemented by including a time reference in a control signal, e.g. a timestamp indicating a future moment in time when the generation should start.

The device 300 is further configured to receive at least first Distributed Acoustic Sensing, DAS, data corresponding to a first DAS measurement synchronised with the generation of the first geo-acoustic signal and second DAS data corresponding to a second DAS measurement synchronised with the generation of the second geo-acoustic signal. To this end, the device 300 may interact with a DAS module 350. For example, the device 300 may be configured to instruct the DAS module 350 to perform the DAS measurements and to receive the DAS data from the DAS module 350. The DAS module 350 may be installed at the OLT 310, as illustrated in Fig. 3A, or may be installed elsewhere in the PON, e.g. in a splitter 320 or in an ONU 321, 322, 323. Optionally, the device 300 may comprise the DAS module 350. The device 300 may comprise a DAS control module configured to control the DAS module 350 for performing the synchronised DAS measurements, and to receive the DAS data from the DAS module. Optionally, more than one DAS module 350 may be installed in the PON for performing the DAS measurements and interact with the device in a similar way.

The device 300 is further configured to determine, from the first and second DAS data, location information indicative for the first and second geographic locations 381, 382 respectively. The location information may, for example, comprise timing information of an event in a DAS plot corresponding to the first or second DAS data.

The device 300 is further configured to determine the map of the one or more fibre routes based on the location information, the first geographic location and the second geographic location. To this end, the device 300 may be configured to cross-reference an event, originating from the same geo-acoustic source, from the DAS plots corresponding to the first and second DAS data. This allows resolving relative positions between points of different fibre sections, which can in turn be geo-referenced using the known geographic locations 381, 382. The device 300 may comprise a mapping module 303 configured to determine the geographic map. The device 300 may further be configured to provide the determined map to a storage medium, e.g. database 305. For example, the mapping module 303 may be further configured to store the geographic map in the database 305.

By triggering at least two signals 371, 372 at at least two locations 381, 382, synchronised with the DAS measurements, drop sections can be identified and localised using a single DAS module 350. By combining information related to the geo-acoustic signals originating from two different locations, the device 300 is able to distinguish between drop fibres 361, 362, 363 behind the splitter 320.

The device 300 may be further configured to trigger generation of a third geo-acoustic signal 373 at a third geographic location 383 different from the first and second geographic locations 381, 382, and further configured to receive third DAS data corresponding to a third measurement synchronised with the generation of the third geo-acoustic signal 373. By further combining the third DAS data with the first and second DAS data, a more accurate map can be obtained.

It is noted that, one or more of the geo-acoustic signals 371, 372, 373 at locations 381, 382, 383 may be replaced by an acoustic signal generated somewhere within the PON, e.g. at an ONU, 321, 322, 323, at splitter 320, at OLT 310, or elsewhere attached to a fibre section 360, 361, 362, 363. Additionally, any combination of extra-PON acoustic generators 331, 332, 333 and intra-PON acoustic generators may be used.

Figure 3B shows a geo-acoustic generator 330. The geo-acoustic sources 331, 332, 333 may, for example, be such a geo-acoustic generator 330.

The geo-acoustic generator 330 is configured to be arranged at a geographic location 381, 382. The geo-acoustic generator 330 comprising a signal generation module 340 configured to, in response to a trigger, generate a geo-acoustic signal at a predefined time reference. The geo-acoustic generator 330 may further comprise a communication interface 341 configured to receive the trigger. Such a communication interface may, for example, comprise a radio link, for example to communicate with module 304.

Further, one or more of the ONUs 321, 322, 323 may comprise an acoustic generator configured to be arranged at a geographic location of the ONU, the acoustic generator comprising: a signal generation module 340 configured to, in response to a trigger, generate an acoustic signal at a time reference; and a communication interface 341 configured to receive the trigger. Such an acoustic generator may be in direct or indirect contact with the optical fibre, thereby avoiding a need for ground-based vibrations to be detectable in the DAS data. The signal generation module 340 may be further configured to generate a geo-acoustic signal at an ONU-specific frequency, or, having an ONU-specific pulse pattern.

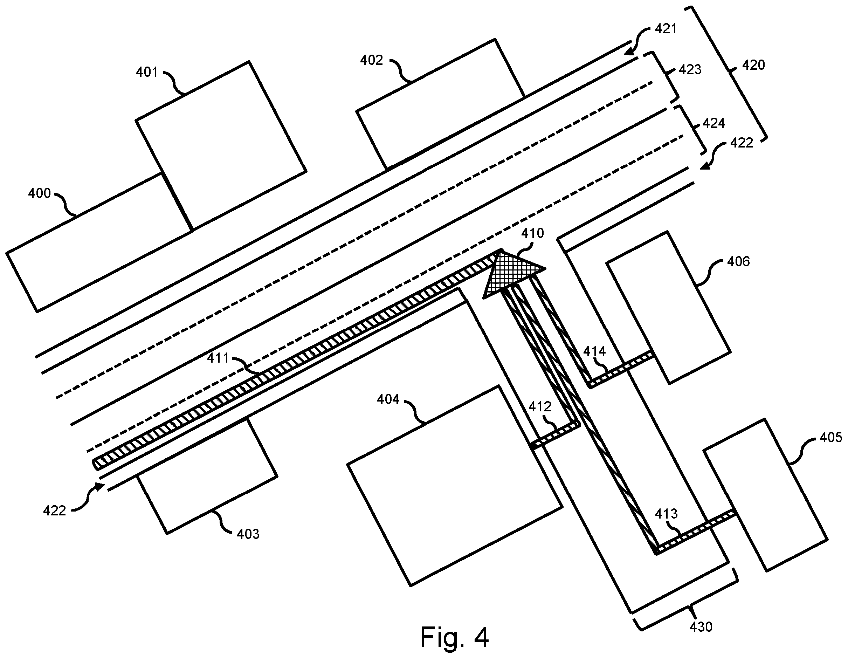

Figure 4 shows an excerpt of a visualisation of a map of fibre routes of an ODN of a PON. Houses 400, 401, 402, 403, 404, 405, 406 are shown in two intersecting streets 420, 430. Street 420 is comprises two pavements 421, 422 on opposite sides of the street. The street 420 is a two-way street comprising a roadway with sections 423, 424 provided for the two respective driving directions. A fibre 411 of the PON is connected to a splitter 410 that splits off into fibre sections 412, 413, 414, respectively providing fibre access to houses 404, 405, 406. Since the streets 420, 430 define an entire zone where the fibres could possibly be buried, it may not be obvious to know where the fibres are actually physically located. Therefore, geo-referencing the ODN may be of use to quickly gain this knowledge, for example for the purpose of maintenance of the PON.

Knowledge of public area topology, e.g. including streets 420, 430, may be used to constrain the mapping of the fibre routes. The device 300 may therefore be further configured to determine the map of the one or more fibre routes in function of PON topology information. Such PON topology information may comprise one or more of the following: a geographic location of an OLT of the PON, a geographic location of an ONU of the PON, a geographic location of a splitter 410 of the ODN, a geographic zone 420, 430 of a public area where a fibre route can pass through, a splitter ratio of a splitter 410 of the ODN.

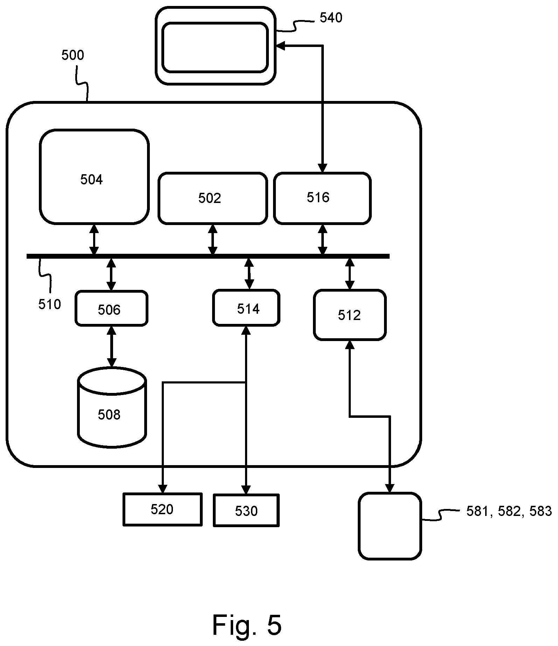

Fig. 5 shows a suitable computing system 500 enabling to implement embodiments of determining a map of fibre routes of an ODN according to the first, second, third, fourth, fifth, sixth, seventh, or eighth aspect. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory, RAM or another type of dynamic storage device that stores information and instructions for execution by processor 502 and/or a read only memory, ROM, or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems, for example with other computing devices 581, 582, 583. The communication interface 512 of computing system 500 may be connected to such another computing system by means of a local area network, LAN, or a wide area network, WAN, such as for example the Internet. Storage element interface 506 may comprise a storage interface such as for example a Serial Advanced Technology Attachment, SATA, interface or a Small Computer System Interface, SCSI, for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, - ROM disk, solid state drives, flash memory cards, ... could be used. Computing system 500 may thus correspond to a device 300 or a geo-acoustic generator 330 in the embodiments illustrated by Figure 3.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the first, second, third, fourth, fifth, sixth, seventh, or eighth aspects have been illustrated by reference to specific embodiments, it will be apparent to those skilled in the art that the first, second, third, fourth, fifth, sixth, seventh, or eighth aspects are not limited to the details of the foregoing illustrative embodiments, and that the present disclosure may be embodied with various changes and modifications without departing from the scope thereof. The present embodiments are therefore to be considered in all respects as illustrative and not restrictive, the scope of the embodiments being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments are capable of operating according to the first, second, third, fourth, fifth, sixth, seventh, or eighth aspects in other sequences, or in orientations different from the one(s) described or illustrated above.

## Claims

1. A device for determining a map of one or more fibre routes of an optical distribution network, ODN, of a passive optical network, PON, wherein the device is configured to:
- trigger generation of at least a first acoustic signal at a first geographic location and a second acoustic signal at a second geographic location, wherein the second geographic location is different from the first geographic location;
- receive at least first Distributed Acoustic Sensing, DAS, data corresponding to a first DAS measurement synchronised with the generation of the first acoustic signal and second DAS data corresponding to a second DAS measurement synchronised with the generation of the second acoustic signal;
- determine, from the first and second DAS data, location information indicative for the first and second geographic locations respectively; and
- determine the map of the one or more fibre routes based on the location information, the first geographic location and the second geographic location.

2. The device of claim 1, further configured to trigger generation of a third acoustic signal at a third geographic location different from the first and second geographic locations, and further configured to receive third DAS data corresponding to a third measurement synchronised with the generation of the third acoustic signal.

3. The device of claim 1 or 2, further configured to instruct at least one acoustic generator arranged at the geographic locations to generate the respective acoustic signals.

4. The device of claim 3, further configured to generate at least one control signal for the at least one acoustic generator for triggering generation of the acoustic signals, wherein the at least one control signal is configured to trigger one or more of the at least one acoustic generators to generate an acoustic signal at one or more geographic locations.

5. The device of claim 4, wherein the at least one control signal comprises time references to synchronise the respective DAS measurements with the generation of the acoustic signals.

6. The device of claim 4 or 5, further configured to transmit the at least one control signal to the at least one acoustic generator.

7. The device of any one of claims 3-6, wherein one of the at least one acoustic generator is a geo-acoustic generator or an acoustic generator configured to be in contact with a fibre of the ODN.

8. The device according to any one of the preceding claims, wherein receiving the DAS data comprises:
- instructing a DAS module to perform the DAS measurements; and
- receiving the DAS data from the DAS module.

9. The device according to any one of the preceding claims, further configured to trigger simultaneous generation of the acoustic signals at different acoustic frequencies.

10. The device according to any one of the preceding claims, further configured to trigger generation of the acoustic signals with different pulse patterns.

11. The device according to any one of the preceding claims, further configured to determine the map of the one or more fibre routes in function of PON topology information, comprising one or more of the following: a geographic location of an optical line terminal, OLT, of the PON, a geographic location of an optical network unit, ONU, of the PON, a geographic location of a splitter of the ODN, a geographic zone of a public area where a fibre route can pass through, a splitter ratio of a splitter of the ODN.

12. A acoustic generator configured to be arranged at a geographic location, the acoustic generator comprising:
- a signal generation module configured to, in response to a trigger provided by a device according to any one of the preceding claims, generate an acoustic signal at a time reference; and
- a communication interface configured to receive the trigger from the device.

13. An optical network unit, ONU, comprising an acoustic generator according to claim 12.

14. The ONU of claim 13, wherein the signal generation module is further configured to generate the acoustic signal at an ONU-specific frequency, or, having an ONU-specific pulse pattern.

15. A computer-implemented method for determining a map of one or more fibre routes of an optical distribution network, ODN, of a passive optical network, PON, the computer-implemented method comprising:
- triggering generation of at least a first acoustic signal at a first geographic location and a second acoustic signal at a second geographic location, wherein the second geographic location is different from the first geographic location;
- generating the first and second acoustic signals at the respective geographic locations;
- performing at least a first and a second Distributed Acoustic Sensing, DAS, measurement of the respective acoustic signals to obtain first and second DAS data respectively;
- determining, from the first and second DAS data, location information indicative for the first and second geographic locations respectively; and
- determining the map of the one or more fibre routes based on the location information, the first geographic location and the second geographic location.
